Europäisches Patentamt

European Patent Office

Office européen des brevets

(19)

(11) Veröffentlichungsnummer: **0 156 285 B1**

(12) **EUROPÄISCHE PATENTSCHRIFT**

(45) Veröffentlichungstag der Patentschrift: **10.04.91**

(21) Anmeldenummer: **85103153.4**

(22) Anmeldetag: **19.03.85**

(51) Int. Cl.⁵: **C08L  59/02**, C08L 51/04,
C08L 51/06, C08L 51/08,
C08L 67/02, C08L 75/04,
C08L 35/02

(54) **Schlagzäh modifiziertes Polyoxymethylen und daraus hergestellte Formkörper.**

(30) Priorität: 28.03.84 DE 3411329
18.02.85 DE 3505524

(43) Veröffentlichungstag der Anmeldung:
02.10.85 Patentblatt 85/40

(45) Bekanntmachung des Hinweises auf die
Patenterteilung:
10.04.91 Patentblatt 91/15

(84) Benannte Vertragsstaaten:
AT BE CH DE FR GB IT LI NL SE

(56) Entgegenhaltungen:
EP-A- 0 004 973          EP-A- 0 115 373
AT-B- 289 388            FR-A- 2 046 991
FR-A- 2 376 189          US-A- 4 296 216

(73) Patentinhaber: HOECHST AKTIENGESELL-
SCHAFT
Postfach 80 03 20
W-6230 Frankfurt am Main 80(DE)

(72) Erfinder: Burg, Karlheinz, Dr.
Eichenweg 18
W-6200 Wiesbaden(DE)
Erfinder: Cherdron, Harald, Prof. Dr.
Eichenweg 40
W-6200 Wiesbaden(DE)
Erfinder: Kloos, Friedrich, Dr.
Südring 112
W-6500 Mainz(DE)
Erfinder: Schlaf, Helmut, Dr.
Zum Gimbacher Hof 20
W-6233 Kelkheim(Taunus)(DE)

## Beschreibung

Polyacetale werden seit langem als vielseitige Werkstoffe vor allem im technischen Bereich eingesetzt. Sie eignen sich wegen ihrer hervorragenden mechanischen Eigenschaften wie hoher Steifigkeit, Härte und Festigkeit, sowie der Möglichkeit, Formteile und Formkörper in engen Toleranzgrenzen herzustellen und der guten Beständigkeit gegenüber vielen Chemikalien vielfach als Metallersatz. Für eine Reihe potentieller Anwendungen weisen sie allerdings auf Grund ihrer relativ hohen Glastemperatur eine zu geringe Schlagzähigkeit, inbesondere Kerbschlagzähigkeit auf. Für solche Anwendungsgebiete ist es zusätzlich wünschenswert, daß die Produkte auch bei tiefen Umgebungstemperaturen ihre guten Schlagzähigkeitseigenschaften behalten.

Aus der Patentliteratur sind eine Reihe von Methoden bekannt, die Zähigkeit teilkristalliner, thermoplastisch verarbeitbarer Polymerer durch Einarbeiten vernetzter oder unvernetzter, teilweise auch gepfropfter Elastomerer zu verbessern. Als Beispiele für Polyoxymethylen seien genannt: mit Polyurethanen modifiziertes Polyoxymethylen (DE-C-1 193 240); mit einer zweiphasigen Mischung aus Polybutadien und Styrol/Acrylnitril (ABS) modifiziertes Polyoxymethylen (DE-C-1 931 392); mit einem auf Basis Acrylester-Butadien hergestellten Pfropfcopolymer modifiziertes Polyoxymethylen (DE-C-1 964 156), ein mit einem Polydien/Polyalkylenoxid-Blockpolymerisat modifiziertes Polyoxymethylen (DE-C-2 408 487) und schließlich ein mit modifizierten Polysiloxanen bzw. Silicon-Kautschuken ausgerüstetes Polyoxymethylen (DE-A-2 659 357). Die genannten Mischungen besitzen zwar bei Raumtemperatur verbesserte Zähigkeitsparameter; insbesondere die Kälteschlagzähigkeit ist jedoch wegen der relativ hohen Glasübergangstemperatur der Elastomerphase für manche Zwecke nicht befriedigend. Dies gilt zwar nicht für die Mischungen der DE-Offenlegungsschrift; jedoch sind die hier als Pfropfbasis eingesetzten Polysiloxane bzw. Silicon-Kautschuke recht teuer. Zum Teil enthalten sie bzw. die daraus durch Pfropfung erhaltenen Schlagzäh-Komponenten auch Halogen. Dessen Abspaltung in Form von Halogenwasserstoffsäuren führt zu nachhaltiger Schädigung der Polyoxymethylen-Matrix.

Aus der EP-A-37686 sind schlagzähe Abmischungen von harten thermoplastischen Kunststoffen, einem kautschukelastischen Elastomeren und einer die Verteilung des Elastomeren in der Kunststoffmatrix begünstigenden Komponente bekannt. Bei der Elastomerkomponente handelt es sich um Propfcopolymerisate mit Kern-Hüllen-Struktur (u.a. MBS oder ABS). Polyoxymethylen wird in dieser Literaturstelle als Polymermatrix nicht erwähnt. Gleiches gilt auch für die EP-A-79477, die Formmassen mit verbesserter Tieftemperatur-Schlagzähigkeit aus Polyestern und einer Schlagzähkomponente u.a. mit Kern-Hüllen-Struktur zum Gegenstand hat. Die Hülle der Partikel der Schlagzähkomponente kann dabei aus mehreren Schalen unterschiedlicher stofflicher Zusammensetzung aufgebaut sein. Als zwingenden Bestandteil enthält die Schlagzähkomponente auch noch Polycarbonat.

Die Aufgabe der vorliegenden Erfindung war es daher, schlagzäh modifiziertes Polyoxymethylen bereitzustellen, das bei Temperaturen bis -40 °C gegenüber bisher bekannten Systemen wesentlich verbesserte Zähigkeitsparameter aufweist, ohne daß dabei die ursprünglichen, vorteilhaften Eigenschaften des Polyoxymethylens, wie gute Witterungs- und Alterungsbeständigkeit, hohe Oberflächengüte, vorteilhafte thermoplastische Verarbeitbarkeit wesentlich beeinträchtigt werden. Aufgabengemäß sollten weiterhin kostengünstige, halogenfreie Schlagzäh-Komponenten zum Einsatz kommen.

Es wurde nun gefunden, daß sich diese Aufgabe überraschenderweise dadurch lösen läßt, daß als Schlagzäh-Komponente Pfropfcopolymere aus einem kautschukelastischen, einphasigen Kern auf Basis von Polydien und einer harten Pfropfhülle (Kern-Hüllen-Struktur) eingesetzt werden.

Die Erfindung betrifft daher eine Mischung im wesentlichen bestehend aus Polyoxymethylen (Komponente A) und 5 - 50 Gew.-%, bezogen auf die Gesamtmischung, eines kautschukelastischen Pfropfcopolymeren (Komponente B), sowie gegebenenfalls einer polymeren Drittkomponente (Komponente C) und gegebenenfalls üblichen Zusatzstoffen, dadurch gekennzeichnet, daß das Pfropfcopolymere in dem Polyoxymethylen in feiner Verteilung vorliegt und aus Partikeln besteht, die aus einem kautschukelastischen einphasigen Kern auf Basis von Polydien und einer harten Pfropfhülle aufgebaut sind.

Weiterhin bezieht sich die Erfindung auf eine Mischung, im wesentlichen bestehend aus Polyoxymethylen (Komponente A), 5 - 50 Gew.-%, bezogen auf die Gesamtmischung, eines kautschukelastischen Pfropfcopolymeren (Komponente B') und einer polymeren Drittkomponente (Komponente C), dadurch gekennzeichnet, daß die Komponente B' aus Partikeln besteht, die aus einem kautschukelastischen, einphasigen Kern auf Basis von Poly-(Meth)Acrylsäureester oder Silikonkautschuk und einer harten Pfropfhülle aufgebaut sind, wobei die Komponente B' mit der Komponente C ein Zweiphasensystem B'/C bildet und dieses Zweiphasensystem sowie die gegebenenfalls zusätzlich noch vorhandene Komponente B' im Polyoxymethylen fein verteilt vorliegen.

Schließlich hat die Erfindung Formkörper zum Gegenstand, die aus derartigen Mischungen hergestellt sind.

Ein wesentliches Merkmal der erfindungsgemäßen Mischungen ist der Gehalt an Komponente B bzw. B', also dem kautschukelastischen Pfropfcopolymeren, dessen Menge im allgemeinen zwischen 5 und 50 Gew.-%, vorzugsweise 10 und 40 Gew.-% und insbesondere 10 und 30 Gew.-% bezogen auf die Gesamtmischung, liegt. Die Komponente B ist erfindungsgemäß gegenüber der Komponente B' bevorzugt.

Die Komponente B/B' besteht erfindungsgemäß aus Partikeln, die überwiegend, vorzugsweise zu mehr als 70 % eine Kern-Hüllen(Schalen)-Struktur aufweisen. Der Kern wird dabei von einer kautschukelastischen Polymer-Phase gebildet, auf welche die harte Hülle, die aus mehreren Schalen bestehen kann, aufgepfropft ist. Der Kern soll dabei nach einem weiteren Merkmal der Erfindung einphasig sein, was bedeutet, daß er überwiegend, vorzugsweise vollständig aus der kautschukelastischen Weichphase besteht und nur in geringem Umfang, vorzugsweise überhaupt keine Einschlüsse aus harten Polymerbestandteilen der Hülle enthält. Im allgemeinen macht der Kern 40 bis 95 Gew.-%, vorzugsweise 60 bis 90 %, und insbesondere 70 bis 80 % der Teilchen der Komponente B/B' aus; dementsprechend beträgt der Anteil der Hülle (Schalen) 5 bis 60 Gew.-%, vorzugsweise 10 bis 40 Gew.-% und insbesondere 20 bis 30 Gew.-%.

Stofflich besteht der Kern bei der Komponente B aus Polymeren auf der Basis von Polydienen, wie z.B. Polybutadien oder Polyisopren. Gegebenenfalls kann das Kern-Polymere bis zu 10 Gew.-%, vorzugsweise bis zu 5 Gew.-% an Comonomer-Einheiten enthalten. Bevorzugt handelt es sich bei dem Comonomeren um Styrol oder Acrylnitril. Das Kern-Polymere ist dabei vorzugsweise vernetzt, wobei der Gelanteil (in Toluol) im allgemeinen größer als 70 % und vorzugsweise größer als 80 % ist. Als Vernetzer kommt beispielsweise Divinylbenzol in Frage.

Die Hülle der Partikel der Komponente B besteht aus harten Polymeren, die auf den Kern, d.h. dem Pfropfsubstrat, aufgepfropft sind. Die Hülle kann dabei einschalig oder mehrschalig, insbesondere zweischalig ausgebildet sein, wobei im Falle der Mehrschaligkeit die verschiedenen Schalen aus unterschiedlichen Polymeren bzw. Copolymeren bestehen. Die erste Schale ist dabei vorzugsweise vernetzt, während die zweite Schale und die gegebenenfalls weiteren Schalen vernetzt sein können.

Als Monomere, die zu geeigneten Polymeren der Partikelhülle führen, seien hier beispielsweise genannt: Methacrylnitril; Acrylnitril; Methacrylate, deren Alkoholkomponente 1 - 4 C-Atome aufweist, wie Methylmethacrylat; Acrylate, die sich von Alkoholen mit 1 - 6 Kohlenwasserstoffatomen ableiten, wie Ethylacrylat, Propylacrylat oder n-Butylacrylat; Vinylester wie Vinylacetat; Vinyläther; N-Vinyl-N-methylacetamid; Vinylpyrroldion. Zum Aufbau der Hülle kommen auch Copolymere aus diesen Monomeren in Frage oder auch Copolymere aus einem oder mehreren dieser Monomeren mit Styrol, α-Methylstyrol, Vinyltoluol. Mischungen aus 20 - 80 Gew.-% Acrylnitril oder Methacrylnitril mit 80 - 20 Gew.-% der genannten Acrylate, Methacrylate oder Vinylverbindungen haben sich dabei als besonders günstig erwiesen. Bevorzugt sind weiterhin solche Pfropfpolymerisate als Komponente B, bei denen die Hülle zweischalig aufgebaut ist, wobei die erste Schale aus Polystyrol besteht und die zweite (äußere Schale) aus Poly(meth)acrylat, das nach einer weiteren vorzugsweisen Ausgestaltungsform teilweise vernetzt ist. Als vernetzende Monomere können dabei multifunktionelle Monomere wie beispielsweise Äthylenglykol- oder Butylenglykoldimethacrylat oder Triallylcyanurat dienen.

Die Glasübergangstemperatur der vorstehend beschriebenen erfindungsgemäßen Komponente B sollte zweckmäßigerweise zwischen -40°C und -120°C, vorzugsweise unterhalb von -60°C und insbesondere zwischen -80°C und -120°C liegen.

Die Herstellung der erfindungsgemäß als Komponente B eingesetzten Pfropfcopolymeren mit Kern-Hüllen-Struktur ist bekannt und erfolgt entweder durch Einstufenpolymerisation im Falle einer einschlaligen Hülle oder durch Mehrstufenpolymerisation im Falle einer mehrschaligen Hülle. Letztere Verfahrensweise ist beispielsweise in der US-A-3.985.704 beschrieben. In beiden Fällen wird die Pfropfcopolymerisation mittels wasserlöslicher Initiatoren oder mittels aktivierter Initiatorsysteme, deren eine Komponente (Aktivator) zumindest wasserlöslich ist durchgeführt (vgl. hierzu C.B. Bucknall, "Toughened Plastics", Seite 98, Applied Science Publishers LTD, 1977 (London)).

Sowohl bei der einstufigen wie auch bei der mehrstufigen Pfropfpolymerisation geht man von einem Polydien aus, das vorzugsweise in Form eines wäßrigen Latex mit definierter mittlerer Teilchengröße, vorzugsweise im Bereich von 0,1 bis 5 μm vorliegt und das vorzugsweise partiell vernetzt ist.

Für die Herstellung der Komponente B polymerisiert man die Monomeren bzw. Monomerengemische in Gegenwart des Polydiens, wobei ein überwiegender Teil der Monomeren auf die Polydienpartikel aufgepfropft wird. Die Menge an Polydien beträgt im allgemeinen 40 bis 95 Gew.-% und die Menge des Monomeren(gemisches) 5 bis 60 Gew.-%, jeweils bezogen auf die Gesamtmenge. Die erreichte Pfropfausbeute bewegt sich zwischen 60 und 95 %, vorzugsweise zwischen 80 und 90 %. Die Pfropfpolymerisation wird in Lösung oder Emulsion, bevorzugt in wäßriger Dispersion durchgeführt. Hierzu wird der feinteilige Polydienlatex unter Zusatz der üblichen Polymerisationshilfsstoffe wie Emulgier- bzw. Suspendierhilfsmittel, Radikalinitiatoren, Regler etc. vorgelegt, das Monomere oder die Monomermischung zugegeben und bei Temperaturen zwischen 30 und 95°C, vorzugsweise 50 bis 80°C polymerisiert. Im Falle einer Einstufenreaktion ist der Initiator wasserlöslich; es werden also beispielsweise wasserlösliche Peroxide, Perkarbonate, Perborate oder Persulfate eingesetzt. Bei einem Mehrkomponenten-Initiatorsystem (Redoxsystem) muß zumindest eine Komponente wasserlöslich sein. Als Beispiel für Emulgatoren (Dispergatoren) seien angeführt: aliphatische und aromatische Sulfate; Sulfonate; Salze von Carbonsäuren, wie Salze vom Typ der Dresinate; etc.

Im Falle der Mehrstufenreaktion, die erfindungsgemäß bevorzugt ist, erfolgt die Pfropfpolymerisation und die Aufarbeitung wie in der US-A-3.985.704 beschrieben. Dabei wird zur Ausbildung einer mehrschaligen Hülle zunächst ein Monomeres, beispielsweise Styrol auf das Kernpolymere, beispielsweise ein Butadien-Styrol-Copolymeres, aufgepfropft und danach ein anderes Monomeres oder Monomerengemisch, ggf. in Anwesenheit eines Vernetzers.

Die mittlere Teilchengröße der Partikel der sprühgetrockneten Komponente B beträgt zweckmäßigerweise 20 bis 250 μm und bevorzugt 20 bis 150 μm.

Bei der Komponente B' besteht der Kern in dem einen Fall überwiegend oder vollständig aus vorzugsweise teilvernetzten Poly-(meth)acrylsäureestern, wobei die Alkohol-Komponente in dem Ester im allgemeinen 1 bis 15 C-Atome, vorzugsweise 1 bis 8 C-Atome enthält. Als Comonomere kommen olefinische Monomere, wie Butadien, Cyclooctadien, Vinylether und Halogenalkylacrylate in Frage. Der Gelanteil (in Toluol) beträgt vorzugsweise mindestens 50 %, insbesondere mindestens 70 %. Hinsichtlich der Pfropfhülle kommen grundsätzlich die gleichen Monomeren, wie bei der Komponente B dargelegt, in Betracht. Auch die Teilchengröße der Komponente B' liegt in dem bei der Komponente B beschriebenen Bereich. Derartige Pfropfpolymere auf Poly-(meth)acrylsäureester-Basis sowie deren Herstellung sind beispielsweise beschrieben in der DE-B-1.964.156, der DE-A-2.116.653, sowie den EP-A-50265, 60601 und 64207, auf die hiermit ausdrücklich Bezug genommen wird.

In dem anderen Fall besteht der Kern des Pfropfpolymeren überwiegend oder vollständig aus Silikon-Kautschuk, wobei dieser Begriff hier auch die unvernetzten Organopolysiloxane mitumfassen soll. Auf diese Silikon-Kautschuke, die vorzugsweise pfropfaktive Gruppen enthalten, werden dann die entsprechenden Monomeren aufgepfropft. Als solche kommen die bereits bei der Komponente B offenbarten in Betracht. Derartige Pfropfpolymere auf Basis von Silikon-Kautschuk sowie deren Herstellung sind in der DE-A-26 59 357 beschrieben, auf die hiermit gleichfalls ausdrücklich Bezug genommen wird.

Bei der Komponente C, die in der Mischung aus den Komponenten A und B fakultativ bzw. bevorzugt und in der Mischung aus den Komponenten A und B' erfindungsgemäß zwingend vorhanden ist, handelt es sich um eine relativ niedrig schmelzende Substanz, die in der Schmelze mit der Komponente B/B' gut mischbar ist (Verdünnungsmittel). Besonders gute Effekte der Dreiermischungen, die sich in einer Verbesserung insbesondere der Zähigkeitseigenschaften gegenüber den Zweiermischungen zeigen, werden erhalten, wenn die Komponente B/B' so stark vernetzt ist, daß keine Auflösung dieser Komponente B/B' in der Schmelze der Komponente C erfolgt, sich also ein Zweiphasensystem aus B/B' und C bildet und die Grenzflächenspannung des Systems B/C bzw. B'/C eine feine Verteilung der Komponente B/B' in der Komponente C zuläßt. Bevorzugt befindet sich in diesem Zweiphasensystem B/C bzw. B'/C die Komponente B bzw. B' überwiegend in den Randbereichen, bildet also gewissermaßen die Schale dieses Zweiphasensystems, während dessen Kern überwiegend aus der Komponente C besteht. Mit zunehmender Menge an Komponente B/B' findet sich diese dann auch mehr und mehr in dem Kernbereich dieses Zweiphasensystems und schließlich - bei entsprechend großen Mengen - auch außerhalb desselben in der Polymermatrix A. In den erfindungsgemäßen Dreiermischungen ist sowohl das Zweiphasensystem B/C bzw. B'/C als auch die gegebenenfalls zusätzlich vorhandene Komponente B bzw. B' in der Polymermatrix A fein verteilt. Die Morphologie der Dreierblends, gemäß der das Zweiphasensystem aus den Komponenten B/B' und C in der Komponente A fein verteilt ist, wobei sich die Komponente B/B' an der Grenzfläche des Zweiphasensystems, also quasi zwischen Komponente A und C konzentriert, wird erfindungsgemäß bevorzugt. B/B' wirkt hierbei offenbar als eine Art "polymerer Dispergator" für die Komponente C in der Polymermatrix A.

Der Schmelzpunkt der Komponente C sollte in der Regel höchstens 250°C, vorzugsweise 180 bis 210°C betragen. Die Menge liegt bei 10 bis 95 %, zweckmäßigerweise bei 30 bis 70 % und vorzugsweise bei 40 bis 60 %, bezogen auf die Summe der Komponenten B bzw. B' und C. Als Beispiele für die Komponente C seien hier genannt: Polyurethane, segmentierte Copolyester und Ethylen-Vinylacetat-Copolymere. Diese Polymeren sind beispielsweise beschrieben in der DE-A-2.818.240, auf die hiermit ausdrücklich Bezug genommen wird. Ein weiteres Beispiel für diese Komponente C sind Copolyetheresteramide entsprechend der DE-C-25 23 991.

Es ist zweckmäßig, aber nicht unbedingt erforderlich, die Komponente C zuerst mit der Komponente B bzw. B' zu vermischen und das so erhaltene Prämix dann mit der Komponente A zu homogenisieren.

EP 0 156 285 B1

Erfindungsgemäß werden als Basispolymere (Komponente A) die bekannten Polyoxymethylene eingesetzt, wie sie beispielsweise in der DE-A-2.947.490 beschrieben sind. Es handelt sich hierbei im wesentlichen um unverzweigte lineare Polymere, die in der Regel mindestens 80 %, vorzugsweise mindestens 90 % Oxymethyleneinheiten (-CH$_2$O-) enthalten. Der Begriff Polyoxymethylene umfaßt dabei sowohl Homopolymere des Formaldehyds oder seine cyclischen Oligomeren wie Trioxan oder Tetroxan als auch entsprechende Copolymere.

Homopolymere des Formaldehyds oder Trioxans sind dabei solche Polymere, deren Hydroxylendgruppen in bekannter Weise chemisch gegen Abbau stabilisiert sind, z.B. durch Veresterung oder Veretherung.

Copolymere sind Polymere aus Formaldehyd oder seinen cyclischen Oligomeren, insbesondere Trioxan, und cyclischen Äthern, cyclischen Acetalen und/oder linearen Polyacetalen.

Als Comonomere kommen a) cyclische Äther mit 3, 4 oder 5, vorzugsweise 3 Ringgliedern, b) von Trioxan verschiedene cyclische Acetale mit 5 - 11, vorzugsweise 5, 6, 7 oder 8 Ringgliedern und c) lineare Polyacetale, jeweils in Mengen von 0,1 - 20, vorzugsweise 0,5 - 10 Gew.-%, in Frage. Am besten eignen sich Copolymere aus 99,5 - 95 Gew.-% Trioxan und 0,5 - 5 Gew.-% einer der vorgenannten Cokomponenten.

Die Werte für die reduzierte spezifische Viskosität (RSV-Werte) des Polyoxymethylens betragen im allgemeinen 0,3 - 2,0 dl$\cdot$g$^{-1}$, vorzugsweise 0,5 - 1,5 dl$\cdot$g$^{-1}$ (gemessen in Butyrolaceton, stabilisiert mit 2 Gew.-% Diphenylamin bei 140$^\circ$C in einer Konzentration von 0,5 g/100 ml) und die Schmelzindex-Werte MFI 190/2, 16 liegen zumeist zwischen 0,02 und 50 g$\cdot$min$^{-1}$. Der Kristallitschmelzpunkt des Polyoxymethylens liegt im Bereich von 140 - 180$^\circ$C, vorzugsweise 150 - 170$^\circ$C; seine Dichte beträgt 1,38 - 1,45 g$\cdot$ml$^{-1}$, vorzugsweise 1,40 - 1,43 g$\cdot$ml$^{-1}$ (gemessen nach DIN 53 479).

Die erfindungsgemäße Mischung kann gegebenenfalls noch die bekannten Zusatzstoffe, wie Stabilisatoren, Nukleierungsmittel, Antistatika, Licht- und Flammschutzmittel, Gleit- und Schmiermittel, Weichmacher, Pigmente, Farbstoffe, optische Aufheller, Verarbeitungshilfsmittel udgl. enthalten, deren Menge bis zu 50 Gew.-%, bezogen auf die Gesamtmischung betragen kann. Als Stabilisatoren der Polyacetalphase eignen sich gegen den Einfluß von Wärme insbesondere Polyamide, Amide mehrphasiger Carbonsäuren, Amidine, z.B. Dicyandiamid, Hydrazine, Harnstoffe, Poly(N-vinyllactame) und Erdalkalisalze von aliphatischen, vorzugsweise hydroxylgruppenhaltigen, ein- bis dreibasigen Carbonsäuren mit 2 - 20 Kohlenstoffatomen, z.B. Calciumstearat, Calciumrizinoleat, Calciumlactat und Calciumcitrat. Als Oxidationsstabilisatoren werden vor allem Bisphenolverbindungen verwendet, vorzugsweise Diester von einbasigen 4-Hydroxyphenylalkansäuren, die 7 - 13, vorzugsweise 7, 8 oder 9 Kohlenstoffatome enthalten. Es ist in jedem Fall vorteilhaft zum verstärkten Schutz gegen oxidativen Angriff der Pfropfcopolymeren (Komponente B) neben den üblichen Diphenolverbindungen schwefelhaltige Costabilisatoren, wie z.B. ß,ß'-Thio-di(propionsäurelaurylester) zuzugeben. Als hervorragende Oxidationsstabilisatoren bewährt haben sich daneben Systeme auf Diphenylamin- oder Naphtylaminbasis. Zur Stabilisierung der Komponente B eignen sich auch phenolische Antioxydantien, wie sie beispielsweise in der BE-A-853 844 oder in der EP-A-44159 beschrieben sind.

Als Lichtstabilisatoren sind beispielsweise α-Hydroxybenzophenonderivate und Benzotriazolderivate geeignet.

Die Stabilisatoren werden zumeist in einer Menge von insgesamt 0,1 - 5, vorzugsweise 0,5 - 3 Gew.-% (bezogen auf die gesamte Formmasse) eingesetzt.

Weiterhin kann die erfindungsgemäße Mischung auch noch die üblichen Füllstoffe enthalten. Als solche seien beispielsweise genannt: faserförmige Verstärkungsmaterialien wie Glasfasern, Kohlenstoff-Fasern; nichtfasrige Füllstoffe wie Glaspulver, Graphit, Ruß, Metallpulver, Metalloxide, Silikate, Carbonate und Molybdän (IV)-sulfid. Diese Füllstoffe können mit einem Haftvermittler bzw. Haft vermittlersystem ausgerüstet sein. Die Menge des Füllstoffes beträgt bis zu 50 Gew.-%, vorzugsweise 5 bis 40 Gew.-%, bezogen auf die Gesamtmischung. Vorzugsweise enthält die erfindungsgemäße Mischung jedoch keine Füllstoffe.

Die Herstellung der erfindungsgemäßen Mischungen erfolgt durch intensives Mischen der Bestandteile bei erhöhter Temperatur, d.h. im allgemeinen bei Temperaturen oberhalb des Schmelzpunktes der Komponente A, also bei etwa 160 bis 250$^\circ$C, vorzugsweise zwischen 180 und 220$^\circ$C, in gut mischenden Aggregaten wie z.B. Brabendern, Extrudern, vorzugsweise Zweischneckenextrudern, oder auf Mischwalzen. Üblicherweise werden die pulverförmigen Komponenten zunächst bei Raumtemperatur mechanisch gemischt und anschließend zur vollständigen Homogenisierung aufgeschmolzen. Es hat sich dabei gezeigt, daß die Größe und Verteilung der Elastomerteilchen in der Matrix von wesentlichem Einfluß auf die mechanischen Eigenschaften der Mischung sind. Die Mischung der Komponenten sollte daher in der Weise erfolgen, daß die Komponente B/B' und/oder das Zweiphasensystem B/C bzw. B'/C in der Polymermatrix möglichst homogen verteilt ist und die Teilchengröße der Partikel der Komponente B/B' und/oder des Zweiphasensystems B/C bzw. B'/C in den erfindungsgemäßen Mischungen im Bereich zwischen 0,1 und 5 µm, vorzugsweise zwischen 0,2 und 1 µm liegt.

5

Die erfindungsgemäße Mischung läßt sich mechanisch, z.B. durch Zerhacken oder Mahlen zu Granulaten, Schnitzeln, Flocken oder Pulvern zerkleinern. Sie ist thermoplastisch und damit allen für thermoplastischen Massen typischen Verarbeitungsweisen zugänglich. Sie kann daher durch Spritzgießen, Strangpressen, Schmelzspinnen oder Tiefziehen zu beliebigen Formkörpern verarbeitet werden und eignet sich als technischer Werkstoff zur Herstellung von Halbzeug und Fertigteilen, wie Formkörpern, z.B. Bändern, Stäben, Platten, Filmen, Rohren und Schläuchen, sowie Maschinenteilen, z.B. Gehäusen, Zahnrädern Lagerteilen und Steuerelementen sowie von Autozubehörteilen, wie Spoilern udgl.

Die nachfolgenden Beispiele beschreiben die vorliegende Erfindung.

Beispiele

Die hierzu benutzten Größen wurden wie folgt bestimmt:

MFI 190/2, 16 : Gemäß DIN 53 735

Kerbschlagzähigkeit, $a_k$ : Gemäß DIN 53 453 am Normkleinstab

Schädigungsarbeit, Ws : Gemäß DIN 53 443 an 2 mm Platten

Gelbwert, G : Gemäß DIN 6167

Glasübergangstemperatur, Tg: Nach DSC mit 20°/Min. Aufheizgeschwindigkeit

Die in den Beispielen verwendeten Pfropfcopolymeren (Komponente B) wurden durch wäßrige Emulsions-Polymerisation der in den Beispielen genannten Monomeren oder Monomermischungen in Gegenwart des dispergierten Polybutadiens erhalten. Die auf diese Weise hergestellten Pfropfcopolymeren, die erfindungsgemäß (Beispiele 1 bis 8) Kern-Hüllen-Struktur aufwiesen, wurden sprühgetrocknet und in einem Doppelschneckenextruder in unterschiedlichen Gewichtsverhältnissen mit Polyoxymethylen unterschiedlicher Schmelzviskosität gemischt. Die Massetemperatur des Mischgutes lag bei etwa 210 bis 230° C (Gehäusetemperatur ca. 190° C). Das getrocknete Granulat wurde auf dem üblichen Weg zu Prüfkörpern verspritzt, an denen die in der nachfolgenden Tabelle angeführten Werte ermittelt wurden.

Als Materialien wurden eingesetzt:

Vergleichsbeispiel 1

Komponente A: Copolymerisat aus Trioxan und ca. 2 Gew.-% Ethylenoxid, MFI 190/2,16 ca. 9,0.
Komponente B: -

Vergleichsbeispiel 2

Komponente A: Copolymerisat aus Trioxan und ca. 2 Gew.-% Ethylenoxid, MFI 190/2,16 ca. 9,0.
Komponente B: Polybutadien "Diene 35 A" (Firestone)
Tg: -75° C.

Vergleichsbeispiel 3

Komponente A: Copolymerisat aus Trioxan und ca. 2 Gew.-% Ethylenoxid, MFI 190/2, 16 ca. 9,0.
Komponente B: Polybutadien-Latex, mittlere Teilchengröße ca. 0,1 μm, sprühgetrocknet, vernetzt;
Tg. -76° C.

Vergleichsbeispiel 4

Komponente A: Copolymerisat aus Trioxan und ca. 2,0 Gew.-% Ethylenoxid, MFI 190/2, 16 ca. 9,0.

EP 0 156 285 B1

Komponente B: Pfropfcopolymerisat aus 55 Teilen Polybutadien und 45 Teilen eines Gemisches aus 70 Gew.-% Styrol und 30 Gew.-% Acrylnitril, mittlere Teilchengröße 0,5 μm; Tg: -70° C. (Beispiel 8 DE-1964 156)

Beispiel 1

Komponente A: Copolymerisat aus Trioxan und ca. 3,5 Gew.-% Dioxolan, MFI 190/2, 16 ca. 10,0.
Komponente B: Pfropfcopolymeres aus 80 Teilen Polybutadien und 20 Teilen Methylmethacrylat, mittlere Teilchengröße 0,15 μm; Tg: -74° C.

Die Komponente B wurde auf folgende Weise hergestellt: In einem Glasreaktor wurden unter Inertgas 1000 Teile eines Polybutadienlatex mit enger Teilchengrößenverteilung und mit einer mittleren Teilchengröße von 0,15 μm vorgelegt. Der Feststoffgehalt betrug 30 Gew.-%, der pH-Wert lag bei 10,0. Nach Zutropfen von 10 Gew.-% des Pfropfmonomeren wurde die Mischung auf 70° C erwärmt, 0,6 Teile Kaliumpersulfat zugegeben und 15 min bei 70° gerührt. Nachdem die Innentemperatur auf 80° C gesteigert wurde, wurde während einer Periode von 150 min das restliche Monomere zugetropft und anschließend nach 90 min bei 80° gehalten. Das entstandene Pfropfcopolymere wurde durch Sprühtrocknung als feinteiliges Pulver gewonnen.

Beispiel 2

Komponente A: Homopolymeres des Formaldehyds, MFI 190/2, 16 ca. 9,0.
Komponente B: Pfropfcopolymeres aus 80 Teilen Polybutadien und 20 Teilen Methylmethacrylat, mittlere Teilchengröße 0,2 μm; Tg: -74° C.

Die Herstellung der Komponente B erfolgt in Anlehnung an Beispiel 1.

Beispiel 3

Komponente A: Copolymerisat aus Trioxan und ca. 2 Gew.-% Ethylenoxid, MFI 190/2, 16 ca. 9,0.
Komponente B: Mehrstufiges Pfropfcopolymeres aus 70 Teilen Polybutadien und 30 Teilen einer zweischaligen Pfropfhülle bestehend aus 60 Gew.-% Polystyrol als erster Pfropfhülle und 40 Gew.-% Polymethylmethacrylat als zweiter Pfropfhülle, mittlere Teilchengröße 0,2 μm; Tg: -72° C.

Die Herstellung der Komponente B erfolgte folgendermaßen: In einem geeigneten Reaktor wurden 1000 Teile eines feinteiligen Polybutadienlatex unter inerten Bedingungen vorgelegt. Man stellte mit verdünnter Essigsäure auf pH = 9,0 und gab 10 Gew.-% der gesamten Styrolmenge zu. Danach wurde die Mischung auf 70° gebracht und diese nach Zugabe von 0,6 Teilen Kaliumpersulfat 15 min bei 70° belassen. Nach Anspringen der Polymersation wurde innerhalb von 90 min das restliche Styrol zugetropft. Nach etwa 1 Stunde wurde die Innentemperatur auf 80° erhöht, und während einer Periode von 60 min das Methylmethacrylat, dem 1 Gew.-% Äthylenglykoldimethacrylat zugesetzt war, zudosiert. Die Mischung wurde danach noch 90 min bei 80° gehalten. Das entstandene Pfropfcopolymere wurde durch Sprühtrocknung als feinteiliges Pulver gewonnen.

Beispiel 4

Komponente A: Copolymerisat aus Trioxan, ca. 2,0 Gew.-% Ethylenoxid und ca. 0,05 Gew.-% Butandioldiglycidyläther, MFI 190/2, 16 ca. 1,0.
Komponente B: Pfropfcopolymeres aus 70 Teilen Polybutadien und 30 Teilen einer zweischaligen Pfropfhülle aus 60 Gew.-% Polystyrol und 40 Gew.-% Polymethylmethacrylat, mittlere Teilchengröße 0,2 μm; Tg: -71° C.

Die Herstellung der Komponente B erfolgte in Anlehnung an Beispiel 3.

7

Beispiel 5

| Komponente A: | Copolymerisat aus Trioxan und ca. 2,0 Gew.-% Ethylenoxid, MFI 190/2, 16 ca. 2,5. |
| Komponente B: | Pfropfcopolymeres aus 70 Teilen Polybutadien und 30 Teilen einer zweischaligen Pfropfhülle aus 60 Gew.-% Polystyrol und 40 Gew.-% Polymethylmethacrylat, mittlere Teilchengröße 0,2 μm; |
| | Tg: -72° C. |

Die Herstellung der Komponente B erfolgte in Anlehnung an Beispiel 3.

Beispiel 6

| Komponente A: | Copolymerisat aus Trioxan und ca. 3,5 Gew.-% Dioxolan, MFI 190/2, 16 ca. 9,0. |
| Komponente B: | Pfropfcopolymer, hergestellt gemäß Beispiel I der US-A-3.985.704. |

Beispiel 7

| Komponente A: | Copolymerisat aus Trioxan, ca. 3,5 Gew.-% Dioxolan MFI 190/2 16 ca. 10,0. |
| Komponente B: | Pfropfcopolymeres aus 70 Teilen Polybutadien und 30 Teilen Vinylacetat, mittlere Teilchengröße 0,3 μm; |
| | Tg: -69° C. |

Die Herstellung der Komponente B erfolgte in Anlehnung an Beispiel 1; der pH-Wert des Ausgangslatex betrug hier 7,0.

Beispiel 8

| Komponente A: | Copolymerisat aus Trioxan, ca. 2,0 Gew.-% Ethylenoxid, MFI 190/2, 16 ca. 9,0. |
| Komponente B: | Pfropfcopolymeres aus 80 Teilen Polybutadien und 20 Teilen N-Vinylmethylacetamid, mittlere Teilchengröße 0,25 μm; |
| | Tg: -72° C. |

Die Herstellung der Komponente B erfolgte in Anlehnung an Beispiel 1; der pH-Wert des Ausgangslatex betrug hier 7,0.

Beispiel 9

| Komponente A: | Copolymerisat aus Trioxan und ca. 2,0 Gew.-% Ethylenoxid; MFI 190/2,16 ca. 9,0. |
| Komponente B: | Pfropfcopolymeres aus 60 Teilen Polybutadien und 40 Teilen einer zweischaligen Pfropfhülle aus 60 % Polystyrol und 40 % Polymethylmethacrylat, mittlere Teilchengröße 0,15 μm; |
| | Tg: -72° C. |
| Zusatzkomponente: | Glasfaser |

Beispiel 10

| Komponente A: | Copolymerisat aus Trioxan und ca. 2,0 Gew.-% Ethylenoxid, MFI 190/2,16 ca. 9,0. |
| Komponente B: | Pfropfcopolymeres aus 70 Teilen Polybutadien und 30 Teilen einer zweischaligen Pfropfhülle aus 60 Gew.-% Polystyrol und 40 Gew.-% Polymethylmethacrylat, mittlere Teilchengröße 0,4 μm; |
| | Tg: -72° C. |
| Komponente C: | Handelsübliche Copolyetherester ("Hytrel"® bzw. "Arnitel"®) auf Basis Polytetramethylenterephthalat, aufgebaut aus sich wiederholenden Hart- und Weichsegmenten, wobei die amorphen, weichen Segmente aus Polytetramethylenetherglykol, die harten Segmente aus Butylenterephthalat bestanden. Die Shore-D-Härten lagen zwischen 40 und 80. |

Die Komponenten B und C wurden in einem Doppelschneckenextruder zu einem Prämix homogenisiert. Die Massetemperatur lag im Bereich von 200 - 230° C. Das getrocknete Granulat wurde dann in einem zweiten Homogenisierungsschritt in Polyoxymethylen eingearbeitet.

| Beispiel | | Komponente B | | | Kerbschlag-zähigkeit $a_k$ [J/m²] | | | Schädigungs-arbeit Ws [J] | | Teilchengröße der Komponente B in der Mischung µm | Gelbwert G |
|---|---|---|---|---|---|---|---|---|---|---|---|
| | | Gew.-% | Polybutadien-Anteil Gew.-% | | 23° | -20° | -40° | 23° | -40° | | |
| Vergleichs- | 1 | - | - | | 5,5 | 4,5 | 4,5 | 0,25 | 0,22 | - | - 2,0 |
| beispiele | 2 | 20 | 20 | | 4,5 | - | - | 0,25 | - | 50 | + 5,0 |
| | 3 | 20 | 20 | | 5,0 | - | - | 0,30 | - | 20 | + 7,0 |
| | 4 | 36 | 20 | | 7,0 | 5,0 | 4,5 | 0,80 | 0,22 | 5 - 20 | - 1,0 |
| | 1 | 25 | 20 | | 15,0 | 13,0 | 8,0 | 21,5 | 5,5 | 0,15 - 2 | - 8,0 |
| | 2 | 25 | 20 | | 16,0 | 14,5 | 7,5 | 23,0 | 4,5 | 0,2 - 3 | - 7,5 |
| | 3 | 30 | 21 | | 20,0 | 13,0 | 11,0 | 27,0 | 3,0 | 0,2 - 4 | - 6,0 |
| Beispiele | 4 | 30 | 21 | | 18,0 | 14,0 | 9,0 | 10,0 | 3,0 | 0,2 - 3 | - 8,0 |
| Zweier- | 5 | 30 | 21 | | 27,0 | 19,0 | 14,0 | 27,0 | 7,5 | 0,2 - 1 | - 7,0 |
| mischungen | 6 | 30 | 20 | | 21,5 | 13,5 | 12,0 | 26,5 | 4,0 | 0,1 - 3 | -10,0 |
| | 7 | 30 | 21 | | 17,0 | 13,0 | 9,0 | 13,0 | 4,5 | 0,3 - 5 | ± 0 |
| | 8 | 25 | 20 Glasfaser | | 19,0 | 12,0 | 8,0 | 22,0 | 7,0 | 0,25 - 4 | + 1,0 |
| Glasfaser-mod. Produkt | 9 | 20 | 12 | 10 | 8,0 | 4,0 | 3,5 | 0,6 | 0,9 | 0,1 - 0,3 | + 1,0 |

| | | Komponente | | | | | | | | Teilchengröße (µm) der Komponente | |
|---|---|---|---|---|---|---|---|---|---|---|---|
| | | B Gew.-% | PB-Anteil Gew.-% | C Gew.-% | | | | | | B | C |
| Dreier-mischung | 10 | 20 | 14 | 20 | 28,0 | 19,0 | 10,5 | 34,0 | 24,0 | 0,1-0,4 | 1,0-3,0 + 3,0 |

## Ansprüche

1. Schlagzäh modifiziertes Polyoxymethylen, im wesentlichen bestehend aus einer Mischung aus Polyoxymethylen (Komponente A) und 5 - 50 Gew.-%, bezogen auf die Gesamtmischung, eines kautschukelastischen Propfcopolymeren (Komponente B), sowie gegebenenfalls einer polymeren Drittkomponente (Komponente C) und gegebenenfalls üblichen Zusatzstoffen, dadurch gekennzeichnet, daß das Propfcopolymere B, in dem Polyoxymethylen als fein disperse Phase mit einer mittleren Teilchengröße zwischen 0,1 bis 5 $\mu$m vorliegt und aus Partikeln besteht, die aus einem kautschukelastischen, einphasigen Kern auf Basis von Polydien und einer harten Pfropfhülle aufgebaut sind.

2. Polyoxymethylen nach Anspruch 1, dadurch gekennzeichnet, daß der Kern in der Komponente B aus Polydien besteht.

3. Polyoxymethylen nach Anspruch 1 und/oder 2, dadurch gekennzeichnet, daß die Hülle der Partikel der Komponente B einschalig ausgebildet ist und aus Homo- oder Copolymerisaten von (Meth)acrylaten und (Meth)acrylnitril oder aus Styrol und mindestens einem der Monomeren (Meth)acrylat und (Meth)-acrylnitril besteht.

4. Polyoxymethylen nach Anspruch 1 und/oder 2, dadurch gekennzeichnet, daß die Hülle der Partikel der Komponente B zweischalig ausgebildet ist.

5. Polyoxymethylen nach Anspruch 4, dadurch gekennzeichnet, daß die innere Schale aus vernetztem Polystyrol und die äußere Schale aus Poly(meth)acrylat, das gegebenenfalls zumindest teilweise vernetzt ist, oder aus Polymere aus Styrol und mindestens einem der Monomeren (Meth)acrylat und (Meth)acrylnitril besteht.

6. Mischung nach einem oder mehreren der Ansprüche 1 bis 5, dadurch gekennzeichnet, daß die Komponente B eine Glasübergangstemperatur von unterhalb -60 $^\circ$C aufweist.

7. Polyoxymethylen nach einem oder mehreren der Ansprüche 1 bis 6, dadurch gekennzeichnet, daß die Komponente C mit der Komponente B ein Zweiphasensystem B/C bildet und dieses Zweiphasensystem sowie die gegebenenfalls zusätzlich noch vorhandene Komponente B im Polyoxymethylen fein verteilt vorliegen.

8. Polyoxymethylen nach Anspruch 7, dadurch gekennzeichnet, daß sich in dem Zweiphasensystem B/C die Komponente B überwiegend in den Randbereichen befindet.

9. Polyoxymethylen nach Anspruch 7 und/oder 8, dadurch gekennzeichnet, daß die Komponente C in einer Menge von 10 bis 95 Gew.-%, bezogen auf die Summe von Komponente B und C, vorliegt.

10. Polyoxymethylen nach einem oder mehreren der Ansprüche 7 bis 9, dadurch gekennzeichnet, daß der Schmelzpunkt der Komponente C höchstens 250 $^\circ$C beträgt.

11. Polyoxymethylen nach einem oder mehreren der Ansprüche 7 bis 10, dadurch gekennzeichnet, daß die Komponente C ein Polyurethan, einen segmentierten Copolyetherester, ein Copolyetheresteramid oder ein Ethylen-Vinylacetat-Copolymerisat darstellt.

12. Schlagzäh modifiziertes Polyoxymethylen aus Polyoxymethylen (Komponente A), 5 - 50 Gew.-%, bezogen auf die Gesamtmischung, eines kautschukelastischen Propfcopolymeren (Komponente B') und einer polymeren Drittkomponente (Komponente C), dadurch gekennzeichnet, daß die Komponente B', in dem Polyoxymethylen als fein disperse Phase mit einer mittleren Teilchengröße zwischen 0,1 bis 5 $\mu$m vorliegt und aus Partikeln besteht, die aus einem kautschukelastischen, einphasigen Kern auf Basis von Poly-(meth)-acrylsäureester oder Silikonkautschuk und einer harten Propfhülle aufgebaut sind, wobei die Komponente B' mit der Komponente C ein Zweiphasensystem B'/C bildet und dieses Zweiphasensystem sowie die gegebenenfalls zusätzlich noch vorhandene Komponente B' im Polyoxymethylen fein verteilt vorliegen.

**13.** Polyoxymethylen nach Anspruch 12, dadurch gekennzeichnet, daß sich in dem Zweiphasensystem B'/C die Komponente B' überwiegend in den Randbereichen befindet.

**14.** Polyoxymethylen nach Anspruch 12 und/oder 13, dadurch gekennzeichnet, daß die Komponente C in einer Menge von 10 bis 95 Gew.-%, bezogen auf die Summe von Komponenten B' und C, vorliegt.

**15.** Polyoxymethylen nach einem oder mehreren der Ansprüche 12 bis 14, dadurch gekennzeichnet, daß der Schmelzpunkt der Komponente C höchstens 250°C beträgt.

**16.** Polyoxymethylen nach einem oder mehreren der Ansprüche 12 bis 15, dadurch gekennzeichnet, daß die Komponente C ein Polyurethan, einen segmentierten Copolyetherester, ein Copolyetheresteramid oder ein Ethylen-Vinylacetat-Copolymerisat darstellt.

**17.** Polyoxymethylen nach einem oder mehreren der Ansprüche 12 bis 16, dadurch gekennzeichnet, daß die Komponente B eine Glasübergangstemperatur von unterhalb -60°C aufweist.

**18.** Formkörper, hergestellt aus dem schlagzäh modifizierten Polyoxymethylen gemäß einem oder mehreren der Ansprüche 1 bis 17.

**19.** Autozubehörteile, hergestellt aus den schlagzäh modifizierten Polyoxymethylen gemäß einem oder mehreren der Ansprüche 1 bis 17.

## Claims

**1.** A toughened polyoxymethylene essentially composed of a mixture of polyoxymethylene (component A) and 5-50% by weight, relative to the total mixture, of a rubber-elastic graft copolymer (component B) and, if appropriate, a polymeric third component (component C) and, if appropriate, customary additives, wherein the graft copolymer B is present in the polyoxymethylene in the form of a finely disperse phase having an average particle size of between 0.1 and 5μm and is composed of particles which have been formed from a rubber-elastic, single-phase core having a polydiene base and a hard graft shell.

**2.** A polyoxymethylene as claimed in claim 1, wherein the core in the component B is composed of polydiene.

**3.** A polyoxymethylene as claimed in claim 1 and/or 2, wherein the shell of the particles in the component B has been formed as a single skin and is composed of homopolymers or copolymers of (meth)-acrylates and (meth)acrylonitrile or of styrene and at least one of the monomers (meth)acrylate and (meth)acrylonitrile.

**4.** A polyoxymethylene as claimed in claim 1 and/or 2, wherein the shell of the particles in component B has been formed as two skins.

**5.** A polyoxymethylene as claimed in claim 4, wherein the inner skin is composed of crosslinked polystyrene and the outer skin is composed of poly(meth)acrylate which is optionally at least partially crosslinked, or of polymers of styrene and at least one of the monomers (meth)acrylate and (meth) acrylonitrile.

**6.** A mixture as claimed in one or more of claims 1 to 5, wherein the component B has a glass transition temperature below -60°C.

**7.** A polyoxymethylene as claimed in one or more of claims 1 to 6, wherein the component C, together with the component B, forms a two-phase system B/C, and this two-phase system and the component B, which, if appropriate, can also be present in addition, are present in a state of fine distribution in the polyoxymethylene.

8. A polyoxymethylene as claimed in claim 7, wherein the component B is predominantly present in the boundary regions in the two-phase system B/C.

9. A polyoxymethylene as claimed in claim 7 and/or 8, wherein the component C is present in an amount of 10 to 95% by weight, relative to the sum of component B and C.

10. A polyoxymethylene as claimed in one or more of claims 7 to 9, wherein the melting point of the component C is not more than 250°C.

11. A polyoxymethylene as claimed in one or more of claims 7 to 10, wherein the component C is a polyurethane, a segmented copolyether-ester, a copolyether-esteramide or an ethylene/vinyl acetate copolymer.

12. A toughened polyoxymethylene composed of polyoxymethylene (component A), 5-50% by weight, relative to the total mixture, of a rubber-elastic graft copolymer (component B') and a polymeric third component (component C), wherein the component B' is present in the polyoxymethylene in the form of a finely disperse phase having an average particle size of between 0.1 and 5 μm and is composed of particles which have been formed from a rubber-elastic, single-phase core having a poly(meth)acrylic acid ester or silicone rubber base and a hard graft shell, the component B' constituting, together with the component C, a two-phase system B'/C, and this two-phase system and the component B', which can, if appropriate, also be present in addition, are present in a state of fine distribution in the polyoxymethylene.

13. A polyoxymethylene as claimed in claim 12, wherein the component B' is predominantly present in the boundary regions in the two-phase system B'/C.

14. A polyoxymethylene claimed in claim 12 and/or 13, wherein the component C is present in an amount of 10 to 95% by weight, relative to the sum of component B' and C.

15. A polyoxymethylene as claimed in one or more of claims 12 to 14, wherein the melting point of the component C is not more than 250°C.

16. A polyoxymethylene as claimed in one or more of claims 12 to 15, wherein the component C is a polyurethane, a segmented copolyether-ester, a copolyether-esteramide or an ethylene/vinyl acetate copolymer.

17. A polyoxymethylene as claimed in one or more of claims 12 to 16, wherein the component B has a glass transition temperature below -60°C.

18. A shaped article produced from the toughened polyoxymethylene as claimed in one or more of claims 1 to 17.

19. Automobile accessories produced from the toughened polyoxymethylene as claimed in one or more of claims 1 to 17.

**Revendications**

1. Polyoxyméthylène modifié pour pouvoir résister aux chocs (pour être résilient), consistant essentiellement en un mélange de polyoxyméthylène (composant A) et de 5 à 50 % en poids, sur la base du mélange total, d'un copolymère greffé ayant l'élasticité du caoutchouc (composant B), ainsi qu'éventuellement en un troisième composant polymère (composant C) et éventuellement en des additifs usuels, caractérisé en ce que le copolymère greffé B est présent dans le polyoxyméthylène sous forme d'une phase finement dispersée présentant une grosseur moyenne des particules comprise entre 0,1 et 5 μm et consiste en des particules constituées d'un noyau en une seule phase, ayant l'élasticité du caoutchouc, à base d'un polydiène et d'une enveloppe dure greffée.

2. Polyoxyméthylène selon la revendication 1, caractérisé en ce que le noyau consiste dans le composant B en du polydiène.

3. Polyoxyméthylène selon la revendication 1 et/ou 2, caractérisé en ce que l'enveloppe des particules du composant B est formée d'une seule peau et elle consiste en des homopolymères ou copolymères de (meth)acrylate et du (meth)acrylonitrile ou en du styrène et en au moins l'un des monomères : (meth)-acrylates et (meth)acrylonitriles.

4. Polyoxyméthylène selon la revendication 1 et/ou 2, caractérisé en ce que l'enveloppe des particules du composant B est formée de deux peaux.

5. Polyoxyméthylène selon la revendication 4, caractérisé en ce que la peau interne consiste en du polystyrène réticulé et la peau externe consiste en du poly(meth)acrylate, qui est éventuellement au moins partiellement réticulée, ou en un polymère de styrène et d'au moins l'un des monomères : (meth)acrylate et (meth)acrylonitrile .

6. Mélange selon une ou plusieurs des revendications 1 à 5, caractérisé en ce que le composant B présente une température de transition vitreuse inférieure à -60$_{o}$C.

7. Polyoxyméthylène selon une ou plusieurs des revendications 1 à 6, caractérisé en ce que le composant C forme avec le composant B un système en deux phases B/C et en ce que ce système en deux phases, ainsi que le composant B éventuellement encore présent en outre, sont présents sous forme finement répartie dans le polyoxyméthylène.

8. Polyoxyméthylène selon la revendication 7, caractérisé en ce que, dans le système en deux phases B/C, le composant B se trouve surtout dans les zones marginales.

9. Polyoxyméthylène selon la revendication 7 et/ou 8, caractérisé en ce que le composant C est présent en une quantité de 10 à 95 % en poids, sur la base de la somme des composants B et C.

10. Polyoxyméthylène selon une ou plusieurs des revendications 7 à 9, caractérisé en ce que le point de fusion du composant C est au maximum de 250$^{\circ}$C.

11. Polyoxyméthylène selon une ou plusieurs des revendications 7 à 10, caractérisé en ce que le composant C représente un polyuréthanne, un copolyétherester segmenté, un copolyétherésteramide ou un copolymère éthylène/acétate de vinyle.

12. Polyoxyméthylène modifié pour être résistant aux chocs (être résilient), constitué par du polyoxyméthylène (composant A), 5 à 50 % en poids, sur la base du mélange total, d'un copolymère greffé ayant l'élasticité du caoutchouc (composant B') et d'un troisième composant polymére (composant C), caractérisé en ce que le composant B' est présent dans le polyoxyméthylène sous forme d'une phase finement divisée ayant une grosseur particulaire moyenne comprise entre 0,1 et 5 μm et consiste en des particules formées d'un noyau en une seule phase, ayant l'élasticité du caoutchouc, à base d'un poly(ester d'acide(meth)acrylique) ou d'un caoutchouc de silicone et en une enveloppe greffée dure, le composant B' formant avec le composant C un système en deux phases et ce système en deux phases étant présent, ainsi que le composant B' éventuellement encore présent en outre, sous forme finement divisée dans le polyoxyméthylène.

13. Polyoxyméthylène selon la revendication 12, caractérisé en ce que, dans le système en deux phases B'/C, le composant B' se trouve surtout dans les zones marginales.

14. Polyoxyméthylène selon la revendication 12 et/ou 13, caractérisé en ce que le composant C est présent en une proportion de 10 à 95 % en poids, sur la base de la somme des composants B' et C.

15. Polyoxyméthylène selon une ou plusieurs des revendications 12 à 14, caractérisé en ce que le point de fusion du composant C est au maximum égal à 250$_{o}$C.

16. Polyoxyméthylène selon une ou plusieurs des revendications 12 à 15, caractérisé en ce que le composant C représente un polyuréthanne, un copolyester segmenté, un copolyétheresteramide ou un copolymère éthylène/acétate de vinyle.

17. Polyoxyméthylène selon une ou plusieurs des revendications 12 à 16, caractérisé en ce que le composant B présente une température de transition vitreuse inférieure à -60°C.

18. Objet moulé ou façonné, préparé à partir du polyoxyméthylène, modifié pour être résilient, selon une ou plusieurs des revendications 1 à 17.

19. Partie d'accessoire pour automobile, produite à partir du polyoxyméthylène, modifié pour être résilient, selon une ou plusieurs des revendications 1 à 17.